# EUROPEAN PATENT APPLICATION

(11) **EP 4 159 922 A1**
(43) Date of publication of application: **05.04.2023**
(21) Application number: 21812102.8
(22) Date of filing: 25.05.2021
(51) Int. Cl.: E01C 13/00, E01C 7/35

(54) **DECONTAMINATING PAVING**

(30) Priority: 26.05.2020 ES 202030488
(71) Applicant: Reciclaje De Neumaticos Y Cauchos S.L., 30562 Ceuti (ES); Synthelast S.A., 03295 Elche (ES)
(72) Inventor: RODRIGUEZ ANDRES, Francisco Javier, 03295 Elche (ES); CORDOBA CANDELA, Maria Teresa, 03295 Elche (ES)
(74) Representative: Díaz Pacheco, Maria Desamparados
(86) International application number: PCT/ES2021/070374
(87) International publication number: WO 2021/240036

(57) **Abstract**

The invention relates to a decontaminating pavement which can be applied as a flooring for playgrounds or similar surfaces, and comprises at least one base (2) made of black rubber that is ground and glued with a resin binder; and one upper layer (3) of encapsulated and colored rubber, with resins, pigments, additives, and catalysts, wherein the surface of said upper layer (3) is impregnated with a transparent film (4) containing a photocatalytic additive which, in the presence of photons (p) originating from sunlight or from a UV lamp, produces a NOx gas or particle decontamination or elimination effect. Preferably, the photocatalytic additive forming the transparent film (4) with which the surface layer (3) is impregnated is based on nano titanium. Preferably, the upper layer (3) of encapsulated rubber includes as catalysts an enhancer of the catalytic and aromatic/aliphatic binding effect which enhances and activates the effect of the photocatalytic additive of the film (4) impregnating the surface of said upper layer (3).

## Description

### OBJECT OF THE INVENTION

As expressed by the title of the present specification, the invention relates to a decontaminating pavement that confers certain advantages and features to its intended function, as described hereinbelow in detail.

The object of the present invention relates to a pavement made from a base made of recycled rubber which can preferably be applied as a flooring in playgrounds, as an artificial grass filler in soccer fields or similar surfaces in certain areas, has the particularity of having an upper layer of encapsulated rubber with additives and catalysts, the surface of which is impregnated with a transparent film containing a photocatalytic decontaminating agent based on nano titanium which, under the effect of light, due to the combined action with the catalysts in the encapsulated rubber, produce a reducing effect on gas contamination by causing the elimination of nitrous oxide gases that may exist in the environment produced by vehicles driving around the playground.

### FIELD OF APPLICATION OF THE INVENTION

The field of application of the present invention is framed within the industrial sector dedicated to the manufacture of pavements, focusing particularly on the area of pavements made of recycled rubber.

### BACKGROUND OF THE INVENTION

Pavements made of recycled rubber are known to be a practical solution as a pavement for playgrounds, an artificial grass filler in soccer fields or the like.

Said pavements are usually made up of a base of rubber which is granulated and glued, with an upper layer which can be made of different materials, for example EPDM, which is a high-quality composite ethylene, propylene, and diene material, or TPV (or TPE-V), for example, which are vulcanized thermoplastics, i.e., they are a mixture between a thermoplastic matrix and a vulcanizable rubber; they are pieces of colored gums or, for example, particles of encapsulated rubber.

The objective of the present invention is, however, to go one step further and provide, in addition to the mentioned advantages, means for reducing air pollution in cities and urban areas, because in many cases playgrounds are located in urban centers which are also the areas that normally have the most traffic and, therefore, poor air quality as a result of NOx gases.

Moreover, and in reference to the current state of the art, it should be noted that although the applicant knows of at least other rubber products, he is unaware of the existence of any other decontaminating pavement or any other invention having a similar application as a flooring in playgrounds, as an artificial grass component in soccer fields or similar surfaces, with technical and constitutive features that are identical or similar to those of the pavement herein claimed.

### DISCLOSURE OF THE INVENTION

The decontaminating pavement proposed by the invention is configured as the ideal solution to the objective indicated above, with the characterizing details that make it possible and distinguish it being suitably described in the final claims attached to this description.

Namely, as mentioned above, the invention proposes a pavement of the type made from a base made of recycled rubber which, while intended for being applied as a flooring in playgrounds, as an artificial grass component in soccer fields or similar surfaces, has the particularity of having an upper layer of encapsulated rubber with additives and catalysts, the surface of which is impregnated with a transparent film containing a photocatalyst agent based on nano titanium, such that said photocatalyst agent, due to the combined action of the photons originating from either sunlight or a UV lamp, with the catalysts of the encapsulated rubber, which have specifically been studied to enhance the effect thereof, causes high NOx particle conversion levels, i.e., it produces a reducing effect on gas contamination by causing the elimination of nitrous oxide gases or particles that may exist in the environment and are usually produced by vehicles driving around the playground in which the pavement is installed.

Furthermore, given the special nano titanium dispersion as the decontaminating agent applied in the film impregnating the upper encapsulation layer of the pavement, in addition to being a decontaminating agent, it also has a self-cleaning effect and bacteriostatic properties, which, in turn, is extremely interesting for use as a flooring in a playground for which the pavement is mainly intended.

### DESCRIPTION OF THE DRAWINGS

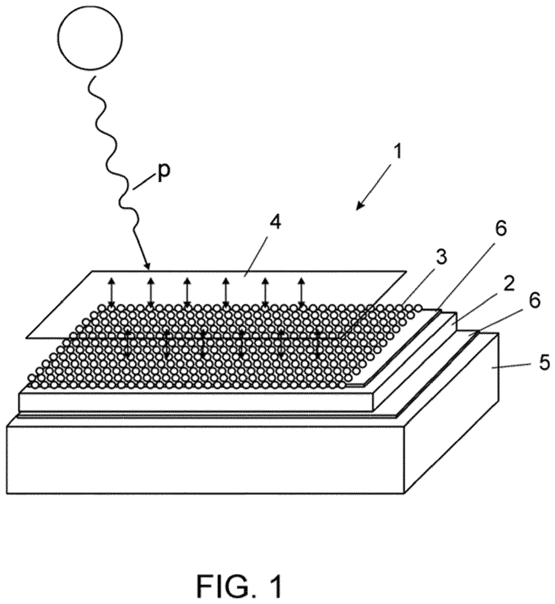

To complement the description that is being given and for the purpose of helping to better understand the features of the invention, attached to the present specification, as an integral part thereof, there is a drawing which, in an illustrative and non-limiting manner, depicts the following:
Sole Figure 1 shows a perspective view of a schematic depiction of an example of the decontaminating pavement object of the invention, where the different layers and elements comprising same as well as the effect produced by light on the photocatalyst agent impregnation covering the surface thereof can be seen.

### PREFERRED EMBODIMENT OF THE INVENTION

In view of the mentioned figures and according to the numbering used, a non-limiting embodiment of the decontaminating pavement of the invention can be observed therein, said decontaminating pavement comprising what is described hereinbelow.

In that sense, as observed in said figures, the pavement (1) of the invention is essentially configured, in a known manner, from at least:
- one base (2) made of black rubber which is granulated and bound with resins, and
- one upper layer (3) of encapsulated and colored rubber, bound with resins, pigments, additives, and catalysts.

And it is distinguished from this already known configuration essentially in that the surface of the upper layer (3) of encapsulated rubber is impregnated with a transparent film (4) containing a photocatalytic additive, preferably based on nano titanium, which, in the presence of photons (p) originating from sunlight or from a UV lamp, produces a NOx gas or particle decontamination or elimination effect.

Furthermore, preferably, the upper layer (3) of encapsulated rubber includes as catalysts an enhancer of the catalytic and aromatic/aliphatic binding effect which enhances and activates the effect of the photocatalytic additive of the film (4) impregnating the surface of said upper layer (3) due to the catalysts of the upper layer (3). In the depiction of Figure 1, said effect between the upper layer (3) and the impregnation film (4) is depicted by arrows.

In the preferred embodiment of the pavement, as can be seen in Figure 1, the pavement (1) is installed on a supporting substrate (5), for example made of cement, and further comprises layers of primer (6) between said support (5) and the base (2) made of rubber, and between the base (2) made of rubber and the upper layer (3) of encapsulated rubber.

Having sufficiently the nature of the present invention, as well as the manner of putting it into practice, it is not considered necessary to further explain the invention for a person skilled in the art to comprehend its scope and the advantages arising from same.

## Claims

1. A decontaminating pavement which can be applied as a flooring for playgrounds or similar surfaces, and comprises at least one base (2) made of black rubber that is ground and glued with a resin binder; and one upper layer (3) of encapsulated and colored rubber, with resins, pigments, additives, and catalysts, said pavement being **characterized by** the fact that the surface of the upper layer (3) of encapsulated rubber is impregnated with a transparent film (4) containing a photocatalytic additive which, in the presence of photons (p) originating from sunlight or from a UV lamp, produces a NOx gas or particle decontamination or elimination effect.

2. The decontaminating pavement according to claim 1, **characterized in that** the photocatalytic additive forming the transparent film (4) with which the surface layer (3) is impregnated is based on nano titanium.

3. The decontaminating pavement according to claim 1 or 2, **characterized in that** the upper layer (3) of encapsulated rubber includes as catalysts an enhancer of the catalytic and aromatic/aliphatic binding effect which enhances and activates the effect of the photocatalytic additive of the film (4) impregnating the surface of said upper layer (3).

4. The decontaminating pavement according to any of the preceding claims, **characterized in that** it is installed on a supporting substrate (5) and comprises layers of primer (6) between said support (5) and the base (2) made of rubber, and between the base (2) made of rubber and the upper layer (3) of encapsulated rubber.
